# EUROPÄISCHE PATENTSCHRIFT

(11) **EP 1 412 825 B1**
(45) Veröffentlichungstag und Bekanntmachung des Hinweises auf die Patenterteilung: **15.09.2010**
(21) Anmeldenummer: 02762323.0
(22) Anmeldetag: 05.07.2002
(51) Int. Cl.: G05B 19/401, G01B 11/00

(54) **VERFAHREN ZUM MESSEN EINES OBJEKTES MIT EINEM KOORDINATENMESSGERÄT MIT BILDVERARBEITUNGSSENSOR**
METHOD FOR MEASURING AN OBJECT BY MEANS OF A CO-ORDINATE MEASURING DEVICE WITH AN IMAGE PROCESSING SENSOR
PROCEDE POUR MESURER UN OBJET AU MOYEN D'UN APPAREIL DE MESURE DE COORDONNEES DOTE D'UN CAPTEUR DE TRAITEMENT D'IMAGES

(30) Priorität: 16.07.2001 DE 10133839
(43) Veröffentlichungstag der Anmeldung: 28.04.2004
(73) Patentinhaber: Werth Messtechnik GmbH, 35394 Giessen (DE)
(72) Erfinder: CHRISTOPH, Ralf, 35394 Giessen (DE)
(74) Vertreter: Stoffregen, Hans-Herbert
(86) Internationale Anmeldenummer: PCT/EP2002/007468
(87) Internationale Veröffentlichungsnummer: WO 2003/009070

(56) Entgegenhaltungen:
- EP-A- 0 336 174
- EP-A- 0 532 169
- DE-A- 4 447 434
- DE-A- 19 639 780
- US-A- 4 492 847
- US-A- 4 616 121
- US-A- 5 018 278
- US-A- 5 025 362
- US-A- 5 189 806
- US-A- 5 319 445
- PATENT ABSTRACTS OF JAPAN vol. 017, no. 352 (M-1439), 5. Juli 1993 (1993-07-05) -& JP 05 050364 A (OKUMA MACH WORKS LTD), 2. März 1993 (1993-03-02)

## Beschreibung

Die Erfindung bezieht sich auf ein Verfahren zum Messen eines Objektes mittels eines Bildverarbeitungssensors, wie CCD-Kamera, mit einem Koordinatenmessgerät, wobei ein Bild des Objekts aufgenommen, übertragen und verarbeitet wird.

Um eine präzise und hochgenaue geometrische Erfassung unterschiedlicher Werkstücke zu ermöglichen, gelangen optische bzw. optoelektronische Messverfahren zum Einsatz. Hauptvorteil dieser ist deren hohe Flexibilität und Verarbeitungsgeschwindigkeit. Zudem stellt die Messung bzw. Prüfung mit CCD-Kameras als Bildverarbeitungssensoren eine Technologie dar, die der menschlichen Wahrnehmung ähnlich ist und daher für viele industrielle Aufgabenstellungen prinzipiell geeignet ist. Stufen der Bildverarbeitungen bilden dabei Bildaufnahme, Bildaufbereitung und -übertragung sowie Bildverarbeitung.

Die Messung eines Objektes bzw. eines Messpunktes oder Messbereiches erfolgt bei stillstehendem Bildverarbeitungssensor bzw. CCD-Kamera. Hierdurch erfährt die Messgeschwindigkeit Einbußen.

Erfindungsgemäß wird das Objekt während der Messung mit einem Lichtblitz beaufschlagt und/oder als Bildverarbeitungssensor wird eine CCD-Kamera mit Shutter verwendet. Durch diesbezügliche Maßnahmen erfolgt eine Korrelation zwischen Bewegung des Sensors und jeweils aufzunehmenden Bild, wobei durch den Lichtblitz bzw. den Shutter ein scheinbares Anhalten des Bildverarbeitungssensors realisiert wird mit der Folge, dass Messungen so durchgeführt werden, als wenn der Bildverarbeitungssensor während der Messung stillstehen würde.

Erfindungsgemäß wird demzufolge der Bildverarbeitungssensor durch das Koordinatenmessgerät nur grob auf die zu messende Position bewegt und dann bei weiterhin bewegtem, jedoch grundsätzlich nicht beschleunigtem Bildverarbeitungssensor, der mit einer Geschwindigkeit v₁ von zum Beispiel 50 - 200 mm/s bewegt werden kann, zu messen. Dabei kann das zum Messen erforderliche Blidspeichern im Bildverarbeitungssensor durch Erreichen eines Zielbereichs erkannt werden. So kann das Abbremsen durch optisches Erfassen von die Position enthaltenden Bereichs des Objektes mittels des Bildverarbeitungssensors eingeleitet werden.

Die DE-A-44 47 434 bezieht sich auf einen CCD-Sensor für schnelles Auslesen von Bildzonen und -zeilen und wird dazu benutzt, Bahnkorrekturen bzw. Bahnverfolgungen von Robotern zu ermöglichen.

Ein Koordinatenmessgerät mit einem optischen und einem taktilen Sensor ist aus der DE-A-196 39 780 bekannt.

Nach der US-A-5,319,445 bzw. der EP-A-0 532 169 werden Objekte gemessen, indem auf diese ein Bild projiziert wird. Dabei kann das Triangulationsverfahren benutzt oder ein Moiré-Sensor eingesetzt werden. Die Messung selbst erfolgt während der Bewegung des Sensors.

Der vorliegenden Erfindung liegt die Aufgabe zu Grunde, ein Verfahren der eingangs genannten Art so weiterzubilden, dass bei hoher Präzision und Flexibilität mit hoher Messgeschwindigkeit gemessen werden kann.

Die Aufgabe wird erfindungsgemäß dadurch gelöst, dass zum Aufnehmen des Objekts mit dem Bildverarbeitungssensor dieser nur grob an die zu messende Position bewegt wird, wobei der zu messende Zielbereich erkannt wird und sodann während der Weiterbewegung der Koordinatenachsen der Bildverarbeitungssensor, über eine Steuer- oder Triggerleitung durch eine Steuereinheit in Bezug auf die Achsen des Koordinatenmessgerätes angesteuert, scheinbar angehalten wird, indem während der Aufnahme ein dem Bildverarbeitungssensor zugeordneter Shutter betätigt oder das Objekt mit einem Lichtblitz beaufschlagt wird.

Insbesondere sieht die Erfindung eine Bewegung des Bildverarbeitungssensors derart vor, dass bei der Geschwindigkeit v₁ das Objekt bzw. Messbereiche oder Messpunkte dieses gemessen werden, anschließend der Bildverarbeitungssensor stark beschleunigt wird, zum Beispiel auf einen Wert von in etwa 5.000 - 15.000 mm/s, um sodann bei einer Beschleunigung 0 mm/s² bei einer Geschwindigkeit v₂ zwischen 400 und 600 mm/s auf den Messbereich bzw. Messpunkt grob ausgerichtet zu werden. Sodann erfolgt ein Abbremsen des Bildverarbeitungssensors auf die Geschwindigkeit v₁ im Bereich zwischen vorzugsweise 50 mm/s und 150 mm/s, um zu messen. Während dieser Zeit kann das Objekt bzw. der zu messende-Bereich mit Lichtblitzen beaufschlagt werden bzw. der Shutter des Bildverarbeitungssensors in der gewünschten Frequenz geöffnet und geschlossen werden. Nach erfolgter Messung wird sodann der Bildverarbeitungssensor im zuvor beschriebenen Sinne beschleunigt, um auf einen neuen Messpunkt bzw. -bereich ausgerichtet zu werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung der Zeichnungen.

Es zeigen:
- Fig. 1: eine Prinzipdarstellung eines Koordinatenmessgerätes,
- Fig. 2: einen Bewegungsablauf eines Bildverarbeitungssensors im Geschwindig- keits-beschleunigungs-Diagramm und
- Fig. 3: ein Blockschaltbild.

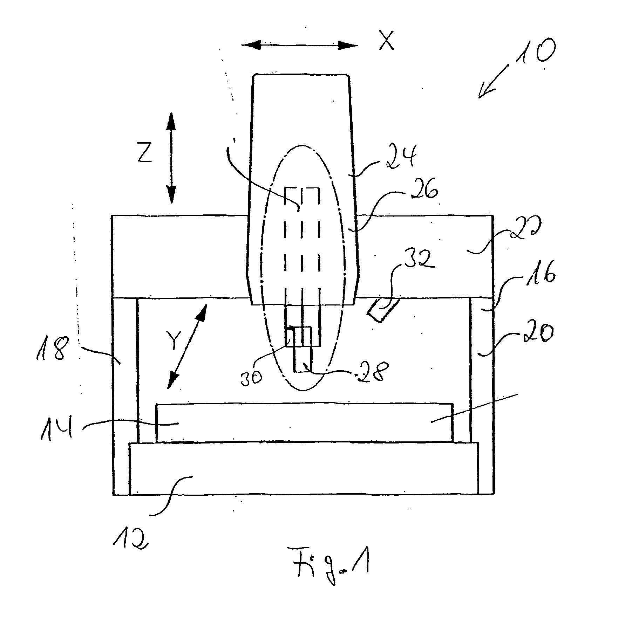

In Fig. 1 ist rein prinzipiell ein optisch arbeitendes Koordinatenmessgerät 10 dargestellt, das in bekannter Weise einen Grundrahmen 12 aufweist, auf dem ein Messtisch 14 angeordnet ist. Auf diesem wird sodann ein nicht dargestelltes Objekt positioniert, das gemessen werden soll. Entlang dem Grundrahmen 12 ist ein Portal 16 in Y-Richtung verstellbar. Hierzu sind Säulen oder Ständer 18, 20 gleitend auf dem Grundrahmen 12 abgestützt. Von den Säulen 18, 20 geht eine Traverse 22 aus, entlang der, also in X-Richtung, ein Schlitten 24 verstellbar ist, der seinerseits eine Pinole oder Säule 26 aufweist, die in Z-Richtung verstellbar ist. Von der Pinole oder Säule 26 geht ein Bildverarbeitungssensor 28 aus.

In der Pinole ist des Weiteren ein Abstandssensor 30 integriert, um beim Messen des Objektes dessen Höhenprofil zu bestimmen. Schließlich geht vorzugsweise von der Traverse 22, gegebenenfalls auch von der Pinole 26, eine Beleuchtungseinheit 32 wie Stroboskop aus, um während des Messen des Objektes dieses mit Lichtblitzen zu beaufschlagen.

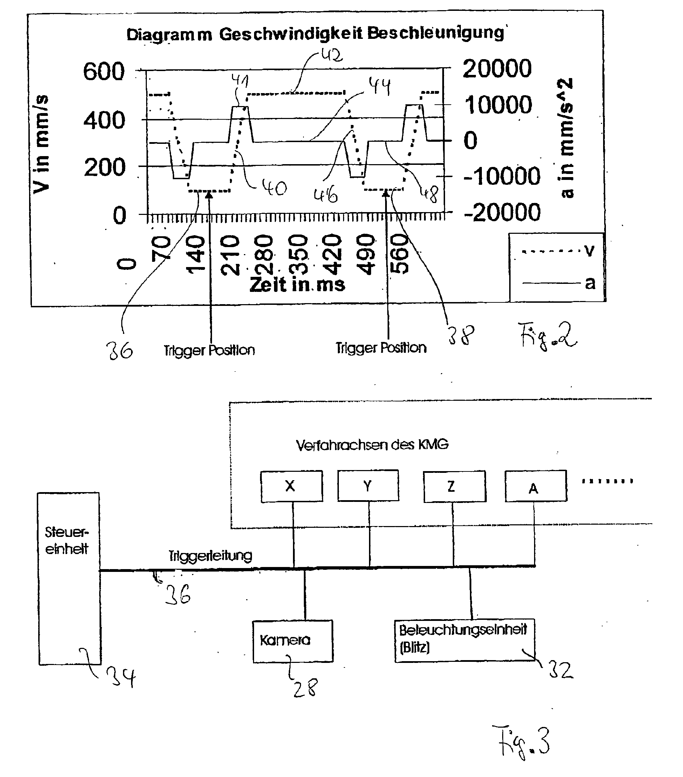

Um mittels des Bildverarbeitungssensors 28 wie CCD-Kamera ein Objekt zu messen, ist erfindungsgemäß vorgesehen, dass der Bildverarbeitungssensor 28 grob auf eine zu messende Position ausgerichtet ist, um sodann noch während seiner Bewegung das Objekt zu messen. Hierzu ist eine Steuereinheit 34 vorgesehen, die über eine Steuer- oder Triggerleitung 36 zum einen das Koordinatenmessgerät in Bezug auf seine Achsen X, Y, Z sowie Drehachse A, und zum anderen den in Fig. 3 als Kamera bezeichneten Sensor 28 sowie die Beleuchtungseinheit 32 ansteuert und einstellt, bei der es sich um ein Stroboskop handeln kann. Gesteuert wird auch ein der Kamera 28 vorgeordneter Shutter, sofern durch diesen die Dauer der Positionserfassung des Objekts bestimmt wird.

In der Fig. 2 ist ein Geschwindigkeits-Beschleunigungs-Diagramm für die Bewegung des Sensors 28 wiedergegeben. Dabei wird durch die gestrichelte Linie die Geschwindigkeit und durch die durchgezogene Linie die Beschleunigung des Sensors 28 prinzipiell wiedergegeben. Die mit "Trigger Position" gekennzeichneten Bereiche 36, 38 stellen diejenigen dar, in denen eine Messung erfolgt. Dabei wird entsprechend dem Ausführungsbeispiel der Sensor 28 mit einer Geschwindigkeit von zum Beispiel 100 mm/sec. bewegt. Während der Messung, also während der Zeit 36, 38 wird der Sensor 18 nicht beschleunigt. Nach der Messung erfolgt eine Beschleunigung (Bereiche 40 bzw. 41), um sodann während des Grobpositionieren des Sensors 28 auf den Messbereich den Sensor 28 bei fehlender Beschleunigung (Gerade 44) mit einer Geschwindigkeit von zum Beispiel 500 mm/s zu bewegen (Bereich 42). Nachdem die Grobausrichtung erfolgt ist (Ende der Zeitstrecke 46), wird der Sensor 28 negativ beschleunigt, also abgebremst (Flanke 44), um sodann bei fehlender Beschleunigung (Gerade 48) mit einer Geschwindigkeit von zum Beispiel 100 mm/s während des Messens verfahren zu werden, wobei der Shutter bzw. das Stroboskop wirksam werden.

Um den Bildverarbeitungssensor 28 wie die CCD-Kamera auf den Messbereich scharf einzustellen, wird über den Abstandssensor 30 der Abstand zum Objekt bzw. dessen Höhenprofil gemessen. Hierdurch ist sichergestellt, dass Messfehler durch unscharfes Abbilden des Messbereiches ausgeschlossen werden.

Um die Genauigkeit der Messung zu verbessern, wird Beginn und Ende der jeweiligen Bildaufnahme, also die Zeitdifferenz Δt in eine Wegstrecke umgerechnet. Beginnt zum Beispiel die Bildaufnahme bei der Zeit t₁, die einem Abstand z₁ entspricht, und endet die Bildaufnahme bei der Zeit t₂, die einem Abstand z₂ entspricht, so wird der Messung der Abstand (z₁ + z₂) : 2 zugeordnet. Gleiches gilt für die anderen Koordinaten.

## Patentansprüche

1. Verfahren zum Messen eines Objektes mittels eines Bildverarbeitungssensors, wie CCD-Kamera, mit einem Koordinatenmessgerät, wobei ein Bild des Objekts aufgenommen, übertragen und verarbeitet wird,
**dadurch gekennzeichnet,**
**dass** zum Aufnehmen des Objekts mit dem Bildverarbeitungssensor dieser nur grob an die zu messende Position bewegt wird, wobei der zu messende Zielbereich erkannt wird und sodann während der Weiterbewegung der Koordinatenachsen der Bildverarbeitungssensor, über eine Steuer- oder Triggerleitung durch eine Steuereinheit in Bezug auf die Achsen des Koordinatenmessgerätes angesteuert, scheinbar angehalten wird, indem während der Aufnahme ein dem Bildverarbeitungssensor zugeordneter Shutter betätigt oder das Objekt mit einem Lichtblitz beaufschlagt wird.

2. Verfahren nach Anspruch 1,
**dadurch gekennzeichnet,**
**dass** zum Einstellen von Arbeitsabstand des Bildverarbeitungssensors auf die Position oder einen die Position enthaltenden Bereich ein Abstandssensor verwendet wird.

3. Verfahren nach einem der vorhergehenden Ansprüche,
**dadurch gekennzeichnet,**
**dass** während der Bewegung des Bildverarbeitungssensors mittels eines mit dem Bildverarbeitungssensor integrierten oder diesem zugeordneten Abstandssensors Höhenprofil des Objektes zur Scharfeinstellung des Bildverarbeitungssensors gemessen wird.

4. Verfahren nach zumindest einem der vorhergehenden Ansprüche,
**dadurch gekennzeichnet,**
**dass** während des Messens der Position der Bildverarbeitungssensor mit der Beschleunigung a₂ = 0 mm/s² bewegt wird.

5. Verfahren nach zumindest einem der vorhergehenden Ansprüche,
**dadurch gekennzeichnet,**
**dass** während des Messens der Position der Bildverarbeitungssensor mit einer Geschwindigkeit v₁ mit 20 mm/s ≤ v₁ ≤ 200 mm/s, insbesondere 50 mm/s ≤ v₁ ≤ 150 mm/s bewegt wird.

6. Verfahren nach zumindest einem der vorhergehenden Ansprüche,
**dadurch gekennzeichnet,**
**dass** der Bildverarbeitungssensor nach einer Messung beschleunigt, dann zum Grobpositionieren des Bildverarbeitungssensors mit nahezu konstanter Geschwindigkeit v₂ weiterbewegt, unmittelbar vor der Messung abgebremst und während der Messung mit der Geschwindigkeit v₁ bewegt wird.

7. Verfahren nach zumindest einem der vorhergehenden Ansprüche,
**dadurch gekennzeichnet,**
**dass** der Bildverarbeitungssensor während des Grobpositionierens mit der Geschwindigkeit v₂ mit vorzugsweise 100 mm/s ≤ v₂ ≤ 1000 mm/s bewegt wird.

## Claims

1. Method for measuring an object by means of an image processing sensor, such as CCD camera, with a coordinate measuring device, with an image of the object being taken, transmitted and processed,
**characterized in**
**that** for image taking of the object with the image processing sensor the latter is moved only crudely to the position to be measured, with the target region to be measured being identified, and then during the onward movement of the coordinate axes the image processing sensor, being controlled via a control or trigger line by means of a control unit relative to the axes of the coordinate measuring device, being seemingly stopped by actuating during the image taking a shutter which is allotted to the image processing sensor or by acted upon the object with a flash of light.

2. Method according to claim 1,
**characterized in**
**that** a gap sensor is used to adjust operating distance of the image processing sensor to the position or a region containing the position.

3. Method according to one of the preceding claims,
**characterized in**
**that** height profile of the object is measured during the motion of the image processing sensor using a gap sensor integral with the image processing sensor or allocated to this for sharp focusing of the image processing sensor.

4. Method according to at least one of the preceding claims,
**characterized in**
**that** the image processing sensor is moved with the acceleration a₂ = 0 mm/s² while the position is being measured.

5. Method according to at least one of the preceding claims,
**characterized in**
**that** the image processing sensor is moved at a speed v₁ with 20 mm/s ≤ v₁ ≤ 200 mm/s, especially 50 mm/s ≤ v₁ ≤ 150 mm/s during the measurement of the position.

6. Method according to at least one of the preceding claims,
**characterized in**
**that** the image processing sensor is accelerated after a measurement, then moved on at almost constant speed v₂ for crude positioning of the image processing sensor, is braked directly prior to measurement and is moved at speed v₁ during the measurement.

7. Method according to at least one of the preceding claims,
**characterized in**
**that** the image-processing sensor is moved at the speed v₂ with preferably 100 mm/s ≤ v₂ ≤ 1000 mm/s during the crude positioning.

## Revendications

1. Procédé de mesure d'un objet au moyen d'un capteur de traitement d'images, tel qu'une caméra CDD, avec un appareil de mesure de coordonnées, sachant qu'une image de l'objet est enregistrée, transmise et traitée,
**caractérisé en ce**
**que** pour enregistrer l'objet avec le capteur de traitement d'images, celui-ci n'est orienté qu'approximativement sur la position à mesurer, sachant que la zone ciblée à mesurer est détectée et qu'ensuite, pendant le déplacement ultérieur des axes de coordonnées, le capteur de traitement d'images est commandé, via une ligne de commande ou de déclenchement, par une unité de commande en fonction des axes de l'appareil de mesure de coordonnées, puis en apparence arrêté, un obturateur affecté au capteur de traitement d'images étant actionné ou l'objet étant éclairé par un flash durant l'enregistrement.

2. Procédé selon la revendication 1,
**caractérisé en ce**
**qu'**est utilisé un capteur de distance pour régler la distance de travail du capteur de traitement d'images sur la position ou une zone comprenant la position.

3. Procédé selon l'une des revendications précédentes,
**caractérisé en ce**
**que**, pendant le mouvement du capteur de traitement d'images, le profil de hauteur de l'objet est mesuré au moyen d'un capteur de distance intégré au capteur de traitement d'images ou affecté à celui-ci, pour la mise au point du capteur de traitement d'images.

4. Procédé selon au moins l'une des revendications précédentes,
**caractérisé en ce**
**que** le capteur de traitement d'images est déplacé avec une accélération a₂ = 0 mm/s² pendant la mesure de la position.

5. Procédé selon au moins l'une des revendications précédentes,
**caractérisé en ce**
**que** le capteur de traitement d'images est déplacé à une vitesse v₁ de 20 mm/s ≤ v₁ ≤ 200 mm/s, en particulier de 50 mm/s ≤ v₁ ≤ 150 mm/s pendant la mesure de la position.

6. Procédé selon au moins l'une des revendications précédentes,
**caractérisé en ce**
**que** le capteur de traitement d'images est accéléré après une mesure, puis déplacé à une vitesse v₂ pratiquement constante pour le positionnement approximatif du capteur de traitement d'images, puis freiné immédiatement avant la mesure, et déplacé à la vitesse v₁ pendant la mesure.

7. Procédé selon au moins l'une des revendications précédentes,
**caractérisé en ce**
**que** le capteur de traitement d'images est déplacé à une vitesse v₂ de préférence de 100 mm/s ≤ v₂ ≤ 1000 mm/s pendant le positionnement approximatif.
